# EUROPÄISCHE PATENTANMELDUNG

(11) **EP 2 915 869 A1**
(43) Veröffentlichungstag der Anmeldung: **09.09.2015**
(21) Anmeldenummer: 14196551.7
(22) Anmeldetag: 05.12.2014
(51) Int. Cl.: C10J 3/18, C10J 3/46, C10J 3/48, C10K 1/00

(54) **Flugstromvergaser mit integriertem Mitteltemperaturplasma**

(30) Priorität: 05.03.2014 DE 102014204027
(71) Anmelder: Siemens Aktiengesellschaft, 80333 München (DE)
(72) Erfinder: Hammer, Thomas, 91334 Hemhofen (DE); Hannemann, Frank, 09599 Freiberg (DE); Klostermann, Doris, 09599 Freiberg (DE); Tremel, Alexander, 91052 Erlangen (DE)

(57) **Zusammenfassung**

Es wird ein Prozess zum Vergasen von festen oder flüssigen Vergasungsstoffen, insbesondere Biomasse, bei Drücken zwischen Normaldruck und 10 MPa sowie bei Vergasungstemperaturen zwischen 800°C und 1500°C zu einem hochkalorischen Synthesegas vorgeschlagen, bei dem in dem Vergasungsraum eines Flugstromvergasers ein endothermer Wasserdampfvergasungsprozess abläuft und ein Plasma mittlerer Temperatur (typisch < 3500°C, bevorzugt <2000°C) Reaktionswärme in einer Menge in den Vergasungsraum einbringt derart, dass die Vergasungstemperatur unter der Ascheerweichungstemperatur von 1500°C gehalten wird. Bei dem erfindungsgemäßen Vergasungsprozess laufen endotherme Reaktionen, insbesondere solche mit hoher Aktivierungsenergie, mit hohen Raten bei weit niedrigeren Gastemperaturen ab, als im Falle eines thermischen Prozesses.

Der Vergasungsprozess, der keine Sauerstoffanlage erfordert, liefert ein von Kohlenwasserstoffen freies Rohgas.

## Beschreibung

Die Erfindung betrifft ein Verfahren und eine Vorrichtung zum Vergasen von festen oder flüssigen Vergasungsstoffen bei Drücken zwischen Normaldruck und 10 MPa sowie bei Temperaturen zwischen 800°C und 1500°C zu Synthesegas.

Die Erfindung bezieht sich ferner auf ein Verfahren und einen Flugstromvergaser zur Vergasung flüssiger aber oder Brennstoffe, insbesondere Biomasse, mit Wasserdampf als Oxidationsmittel und unter Nutzung eines Plasmaerzeugers bei Vergasungstemperaturen zwischen 800 und 1.500°C sowie Drücken zwischen Umgebungsdruck und 10 MPa (100 bar) zu einem hochkalorischen Synthesegas.

Bedingt durch den weltweit zunehmenden Anteil erneuerbarer Energien mit fluktuierendem Charakter, wie z.B. Photovoltaik oder Windenergie, ergeben sich neue Anforderungen für nationale Energieversorgungssysteme. Die installierte Leistung dieser fluktuierenden Energiequellen lässt sich nur dann sinnvoll nutzen, wenn in Zeiten schwacher Nachfrage Energie aus diesen nachhaltigen Quellen effizient gespeichert werden kann und entweder in das Energieversorgungsnetz eingespeist werden kann, wenn die Energienachfrage das Energieangebot übersteigt, oder wenn die so gespeicherte Energie den Bedarf an fossilen Primärenergieträgern anderweitig reduzieren hilft. Bisherige Ansätze dazu liegen in der Wasserstofferzeugung aus erneuerbarer Energie mittels Elektrolyse, die eine ideale Last mit hoher Dynamik für solche Anwendungen darstellt. Der Wasserstoff lässt sich durch Synthese von Kohlenwasserstoffen wie Methan nutzen, indem man den elektrolytisch erzeugten Wasserstoff (H₂) mit einem Kohlenstoffträger wie z.B. Kohlendioxid (CO₂) zur Reaktion bringt. Preisgünstiges CO₂, z.B. aus geologischen Quellen oder aus Biogasanlagen, ist allerdings nur in geringen Mengen und normalerweise kaum dort verfügbar, wo man die Elektrolyse als Energiesenke platzieren würde, also zum Beispiel in der Nähe von Offshore Windparks. Durch Abtrennung aus Kraftwerksabgasen oder gar aus der Umgebungsluft gewonnenes CO₂ hingegen ist so teuer, dass eine Kohlenwasserstoffsynthese damit selbst auf lange Sicht keine wirtschaftliche Option darstellt.

Hier hingegen wird davon ausgegangen, Biomasse anders als bisher nicht nur als Quelle erneuerbarer Energieerzeugung zu nutzen sondern durch Erzeugung eines heizwertreichen, speicherfähigen Produktes für die Speicherung von regenerativem Überschussstrom aus Wind- und Solarkraftwerken einzusetzen. Dieses Produkt kann Wasserstoff, synthetisches Erdgas, Dieselkraftstoff aus einer Fischer Tropsch Synthese sowie Methanol und daraus in weiteren Syntheseschritten erzeugter Produkte wie zum Beispiel Dimethylether (DME) oder Olefine darstellen. Im Gegensatz zu heizwertreichen Stoffen wie Methanol oder Wasserstoff stellt Biomasse einen energetisch minderwertigen Brennstoff dar, der ohne weitere Aufbereitung nur zu Heizzwecken oder zur Stromerzeugung mit sehr geringen Wirkungsgraden verwendet werden kann. Um höhere Wirkungsgrade bei Nutzung von Biomasse erreichen zu können, werden Luftgeblasene Festbett- oder Wirbelschichtvergaser eingesetzt, welche die Biomasse in ein Synthesegas konvertieren und dann einem Gasmotor oder einer Gasturbine zur Stromerzeugung zuführen. Derartige Prozesse können Wirkungsgrade von über 30% erreichen, erfordern aber eine aufwändige Gasreinigung zur Entfernung von Teerverbindungen und unerwünschter Kohlenwasserstoffe. Das erzeugte Synthesegas ist aufgrund des hohen Stickstoffanteiles niederkalorisch und eignet sich nicht für Syntheseprozesse und eine chemische Energiespeicherung. Durch den Einsatz autothermer mit Sauerstoff betriebener Flugstromvergasungsprozesse kann dieser Nachteil beseitigt und ein zur chemischen Speicherung geeignetes Syntheseprodukt erzeugt werden. Flugstromvergasungsprozesse wiederum sind nur für hohe Leistungsgrößen wirtschaftlich, benötigen eine Sauerstoffanlage und aufwändige Biomassetrocknung und Aufbereitung, womit sie für eine dezentrale Biomassenutzung ungeeignet sind.

Es wurden bereits Vorschläge unterbreitet, die benötigte Reaktionswärme über ein Plasma einzubringen. Dazu wurde das "Alter NRG Plasma Gasification System" vorgeschlagen wie von van Nierop, "Alter NRG Plasma gasification system for waste and biomass gasification" auf dem Gasification Technologies Council 2009. Weitere Entwicklungen wurden von A. Gorodetsky "Westinghouse plasma gasification technology and project up-date" auf der 11. Europäischen Vergasungskonferenz vom 08.-12. Mai 2012 in der Session 4 in Cagliari, Italien dargelegt. Diese Technologie benutzt die bekannte drucklose Festbettvergasung und führt einen Teil der erforderlichen Reaktionswärme über mehrere elektrisch angeregte Plasmaerzeuger zu. Als Vergasungsmittel werden Wasserdampf und gegebenenfalls Sauerstoff oder Luft zugeführt. Als besonderer Nachteil erweist sich die für eine Festbettvergasung typische Anordnung der Reaktionszonen in Trocknungszone, Pyrolysezone, Reduktions- und Oxidationszone, die von unten nach oben durchströmt werden. Dabei werden besonders in der Pyrolysezone Kohlenwasserstoffe entbunden, die bis zu 10 % der eingetragenen Brennstoffmenge betragen können. Besonders die darin enthaltenen Teere und Öle müssen aus dem Rohgas abgetrennt werden, was einen besonders hohen Aufbereitungsaufwand erfordert. Die bei der Gaskühlung anfallenden wässrigen Kondensate enthalten eine Vielzahl organischer Säuren, Phenole und organische Schwefelverbindungen, die eine umfangreiche Abwasseraufbereitung erfordern und die Umwelt stark belasten.

Der Erfindung liegt die Aufgabe zugrunde, einen Vergasungsprozess zu schaffen, welcher ein hochwertiges Synthesegas erzeugt, das sich zur Wasserstoffproduktion aber auch für nachgeschaltete Syntheseprozesse eignet, keine Sauerstoffanlage und keine aufwändige Biomassevorbehandlung erfordert und darüber hinaus ein von Kohlenwasserstoffen freies Rohgas liefert.

Das Problem wird durch ein Verfahren mit den Merkmalen des Anspruchs 1 und einen Vergaser mit den Merkmalen des Anspruchs 20 gelöst.

Die Erfindung bringt eine Kombination eines Flugstromvergasers mit einem Plasmaerzeuger für ein nichtthermisches Plasma mittlerer Temperatur (typisch < 3500°C, bevorzugt <2000°C) mit sich und verknüpft die Bereitstellung chemisch aktiver Radikale und thermischer Energie durch das Plasma mit einer Wasserdampfvergasung des eingesetzten Brennstoffes. Unter einem nichtthermischen Plasma mittlerer Temperatur wird hier ein Plasma verstanden, das im Unterschied zum thermischen Lichtbogen nicht durch thermodynamische Gleichgewichtsrelationen beschrieben werden kann, anderseits aber das im Plasma behandelte Gas auf Temperaturen von einigen 1000°C aufheizt. Dabei liegt die Temperatur, die dem neutralen Gas zugewiesen werden kann, weit unterhalb der Temperaturen, die zum Beispiel zur Beschreibung des Ionisationsgrades oder der mittleren Elektronenenergie im Plasma erforderlich wären. Damit ergibt sich als Vorteil, dass endotherme Reaktionen, insbesondere solche mit hoher Aktivierungsenergie, mit hohen Raten bei weit niedrigeren Gastemperaturen ablaufen können als im Falle eines thermischen Prozesses.

Ein nichtthermisches Mitteltemperaturplasma kann besonders einfach erzeugt werden durch eine Gleichstrom- oder Wechselstromgasentladung zwischen metallischen Elektroden, wobei im Falle einer Wechselstromentladung die Frequenz der anliegenden Spannung in weiten Grenzen variiert werden kann. Hierbei wird man durch geeignete Steuerungsmaßnahmen der elektrischen Energieversorgung und des Gasflusses durch das Plasma dafür sorgen, dass die Energie nicht nur in der Nähe der Elektroden dissipiert wird, sondern möglichst effizient in das Volumen des Vergasungsreaktors eingebracht wird.

Andere Möglichkeiten zur Erzeugung eines Mitteltemperaturplasmas ohne Verwendung metallischer Elektroden, die mit dem Plasmagas in Kontakt stehen, bestehen in der elektrischen Energie-Einkopplung in ein strömendes Gas durch elektromagnetische Wellen. Im Radiofrequenzbereich von einigen MHz bis hin zu einigen 100 MHz gibt es die Möglichkeit der kapazitiven Einkopplung durch externe Elektroden oder die Möglichkeit der induktiven Energieeinkopplung durch Spulen um eine elektrisch isolierende Plasmagaszuführung, und im Bereich der Mikrowellen bietet sich die Einkopplung durch strukturierte Wellenleiter, Antennen, und dergleichen an, die ebenfalls durch oder sogar unter Zuhilfenahme der dielektrischen Eigenschaften isolierender, gasführender Strukturen erfolgen kann.

Für einen Plasmavergaser werden zur Erzeugung großer Plasmavolumen bevorzugt ein oder mehrere Lanzen eingesetzt. Jede Lanze beinhaltet Mittel zur Energieeinkopplung durch Gleichstrom und niederfrequenten Wechselstrom (Elektroden) oder elektromagnetischen Wellen (Wellenleiter, Spulen, etc.) und zur Gaszuführung.

Der für den Vergasungsprozess erforderliche Wasseranteil kann zusammen mit dem Brennstoff oder über eine separate Dampfzufuhr erfolgen. Die Vergasungsreaktion ist in ihrer Gesamtheit endotherm, wobei die zur Spaltung erforderliche Energie über das Plasma eingetragen wird. Die Temperatur des Vergasungsprozesses wird bei vorgegebenem Zustrom an Biomasse bestimmter Zusammensetzung (C/H/O-Verhältnis und Enthalpie als Stoffgrößen) zum Einen durch die Plasmaleistung, zum Anderen durch den von außen zugeführten Gasfluss durch das Plasma, der gleichzeitig als Vergasungsmedium dient, auf ein Temperaturniveau unterhalb von 1500°C geregelt, um das Aufschmelzen der Aschebestandteile des Brennstoffes zu verhindern. Hierfür wird entweder der für die Reaktion erforderliche Dampf, zusätzlicher Sauerstoff oder Luft, oder rückgeführtes Synthesegas verwendet.

Zur Verlängerung der Standzeit der Elektroden im Falle des direkt durch Elektroden angeregten Plasmas wird das Plasmagas bevorzugt so zugeführt, dass es die Elektroden kühlt. Das kann erreicht werden, indem das Plasmagas als Hüllgas der Elektroden oder auch durch die Elektroden selbst zugeführt wird.

Im Falle indirekt, d.h. kapazitiv, induktiv, oder allgemein durch elektromagnetische Wellen, gekoppelter Hochfrequenzplasmen wird das Plasmagas so zugeführt, dass eine Kühlung der isolierenden Strukturen, durch die die Energie in das Plasmagas eingekoppelt wird, gewährleistet ist.

Bei Verwendung von zusätzlichem Sauerstoff oder Luft kann die Leistung des Plasmaerzeugers reduziert werden und ein Teil der Reaktionsenergie durch eine exotherme Reaktion des Sauerstoffes bereitgestellt werden. Durch die damit verbundene Verschiebung der Reaktionsenergie vom Plasma zu exothermen Oxidationsreaktionen kann die elektrische Leistungsaufnahme des Systems verringert werden, wobei eine Veränderung der Gasqualität hin zu niedrigeren Wasserstoffgehalten erfolgt.

Die erforderliche Partikelgröße des festen Brennstoffes liegt bei < 2mm, wobei für den Eintrag in den Reaktionsraum ein mechanisches Eintragssystem, zum Beispiel eine Förderschnecke, vorgesehen ist. Alternativ ist ein flüssiger Eintrag mit Zerstäuberdüsen möglich. Die Reaktionsgeschwindigkeit der Vergasungsreaktion wird durch die Reaktion in der Plasmaumgebung (zum Beispiel Reaktion mit freien Radikalen, hohe Wärmestromdichte) beschleunigt, wodurch - bei Einsatz eines Flugstromvergasers - ein hoher Kohlenstoffumsatz bei Vergasungstemperaturen unterhalb des Schlackeerweichungspunktes erreichbar ist. Zur Erhöhung des Kohlenstoffumsetzungsgrades ist eine Rückführung der nach dem Vergasungprozess entfernten Feststoffe bestehend aus Asche und nicht umgesetztem Kohlenstoff möglich.

Das erzeugte Synthesegas enthält aufgrund des allothermen Vergasungsprozesses einen hohen Wasserstoffanteil und wird nach dem Plasmavergaser durch Wasserquenchung oder über einen Abhitzekessel abgekühlt.

Die Nutzung der fühlbaren Wärme zur Dampferzeugung in einem Abhitzekessel ist beispielsweise zur Erzeugung des Dampfes für die Vergasungsreaktion und zur Kühlung der Lanzen des Plasmaerzeugers möglich oder kann in einer Anwendung mit Kraft - Wärme - Kopplung eingebunden werden, was eine Möglichkeit der Wirkungsgradsteigerung bietet. Alternativ ist eine Kombination aus Wasserquenchung auf < 600°C (Teilquenchung) und nachgeschalteter Abhitzenutzung möglich. Diese Anordnung bietet den Vorteil einer Kondensation der speziell in der Biomasse vorhandenen Alkalibestandteile vor Eintritt in den Abhitzekessel und erlaubt die Nutzung kostengünstiger Materialien.

Nach Abkühlung des Synthesegases auf Temperaturen < 600°C können auch die Aschebestandteile vor dem Eintritt in den Abhitzekessel abgetrennt werden. Diese Reinigung des Synthesegases erfolgt bei einer Abhitzenutzung über eine Zyklonabscheidung, Elektrofilter oder mechanische Filtereinheiten wie zum Beispiel keramische Filterkerzen oder Tuchfilter. Im Falle einer Vollquenchung des Synthesegases durch Wassereindüsung kommt eine Nasswäsche zum Beispiel über einen Venturiwäscher zum Einsatz.

Nach der mechanischen Reinigung und Abkühlung des Synthesegases kann ein Teilstrom rückgeführt und zur Kühlung der Plasmalanze verwendet werden.

Das gereinigte Synthesegas wird nachfolgend weiterführenden Prozessen zur Wasserstofferzeugung, chemischen Synthesen oder einer Stromerzeugung über Gasmotoren, Brennstoffzellen oder Gasturbinen zugeführt.

Die Erfindung wird im Folgenden als Ausführungsbeispiel in einem zum Verständnis erforderlichen Umfang anhand von Figuren näher erläutert. Dabei zeigen:
- Fig 1: eine erste Variante eines erfindungsgemäßen Vergasungsreaktors mit Plasmaerzeuger mit Synthesegasrückführung zur Kühlung der Plasmalanzen sowie Wasserquenchung und Nassreinigung,
- Fig 2: eine zweite Variante eines erfindungsgemäßen Vergasungsreaktors mit Plasmaerzeuger mit Kühlung der Plasmalanzen mit Dampf und rückgeführtem Synthesegas sowie Teilwasserquenchung, Abhitzenutzung und Trockenabscheidung der Aschepartikel,
- Fig 3: eine dritte Variante eines erfindungsgemäßen Vergasungsreaktors mit Plasmaerzeuger mit Dampfkühlung der Plasmalanzen sowie zusätzlicher vorgewärmter Luftzufuhr zum Reaktor, Abhitzenutzung und Trockenabscheidung der Aschepartikel.

In den Figuren bezeichnen gleiche Bezeichnungen gleiche Elemente.

Angeführt sind drei mögliche verfahrenstechnische Umsetzungen der Erfindung.

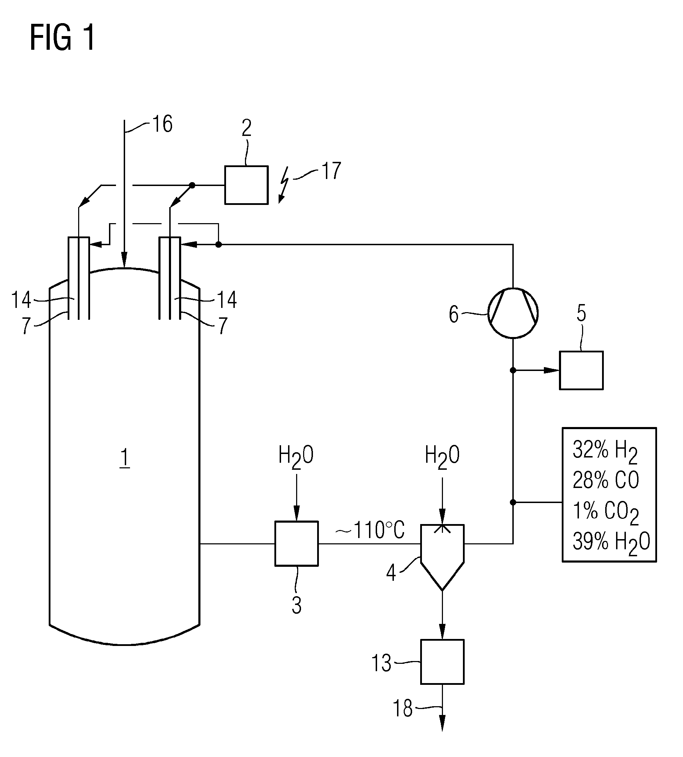

### Variante nach Figur 1

Das erfindungsgemäße Verfahrenskonzept wird anhand der Figur 1 prinzipiell erläutert.

Die erfindungsgemäße Anordnung weist zwei Hauptkomponenten auf:
- den Vergasungsreaktor (1)
- den Plasmaerzeuger (2)

Die Umsetzung der Biomasse erfolgt im Vergasungsreaktor (1) mit Hilfe des Plasmaerzeugers (2) und Zuführung von rückgeführtem feuchten Synthesegas bei Temperaturen zwischen 800°C und 1500°C unterhalb der Ascheschmelztemperatur, wobei der Eintrag der Biomasse (zum Beispiel Sägemehl) mit einer mittleren Partikelgröße von < 2mm über eine Förderschnecke erfolgt. Aufgrund der endothermen Wasserdampfreaktion des Brennstoffes entsteht ein hochkalorisches Synthesegas. Das heiße Rohgas strömt aus dem Vergasungsreaktor (1) in einen Quenchraum (3) und wird dort auf Temperaturen von ca. 110°C durch Verdampfung des Wassers und Aufsättigung des Rohgases abgekühlt. Anschließend wird das gekühlte Rohgas einer Nasswäsche (4) zur Partikelabtrennung zugeführt und über einen Venturiwäscher mechanisch gereinigt. Das von Aschepartikeln gereinigte Synthesegas mit ca. 32vol% H2 und 28vol% CO wird nachfolgend einer chemischen Synthese oder Wasserstoffanlage (5) zugeführt, wobei ein Teil des aufgesättigten Synthesegases über ein Gebläse (6) zur Kühlung der Plasmalanzen (7) und zur Wasserdampfbereitstellung der Vergasungsreaktion zurückgeführt wird. Das partikelbeladene Abwasser der Nasswäsche wird nachfolgend in einer Rußwasseranlage (13) gereinigt und der Filterkuchen (18) ausgetragen. Das gereinigte Waschwasser wird dem Prozess zurückgeführt.

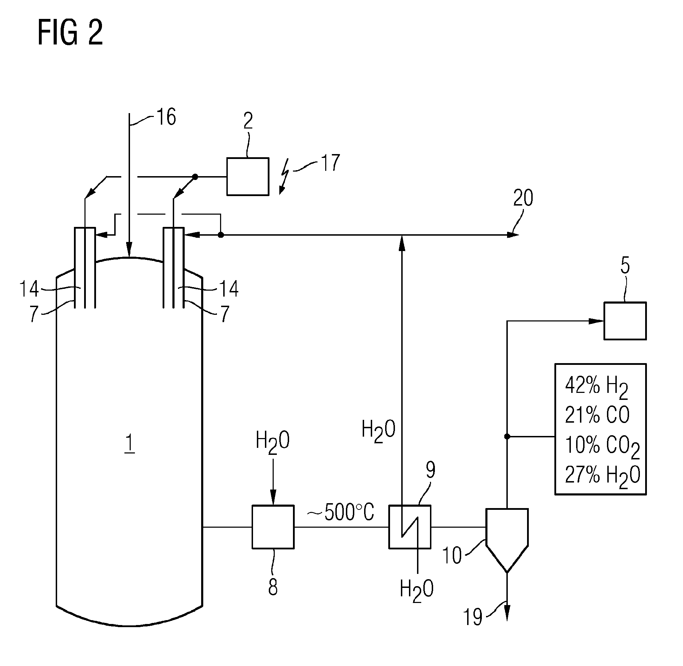

### Variante nach Figur 2

Die Ausführung nach Figur 2 unterscheidet sich von der Ausführung nach Figur 1 durch eine Absenkung der Rohgastemperatur auf ca. 500°C mittels Teilquenchung (8) und anschließender Dampferzeugung in einem Abhitzekessel (9). Der im Abhitzekessel erzeugte Dampf wird zur Kühlung der Plasmalanzen (7) und als Vergaserdampf genutzt. Überschussdampf (20) wird für Heizzwecke beziehungsweise zur Kraft-Wärmekopplung verwendet. Das Rohgas wird im Abhitzekessel (9) auf ca. 170°C abgekühlt und dann in einem trockenen Staubfilter (10) gereinigt, wobei Aschepartikel und nicht umgesetzter Brennstoff abgeschieden werden. Der Staubfilter (10) kann auch vor dem Abhitzekessel eingesetzt werden. Das gereinigte Synthesegas wird nachfolgend einer chemischen Synthese oder Wasserstoffanlage (5) zugeführt.

Die Ausführung nach Figur 2 führt zu einer Erhöhung des Wasserstoffgehaltes im Synthesegas und des Wirkungsgrades, da ein Teil des Dampfes für Anwendungen der Kraft-Wärmekopplung oder Heizzwecke verwendet werden kann und kein zusätzliches Gebläse erforderlich ist.

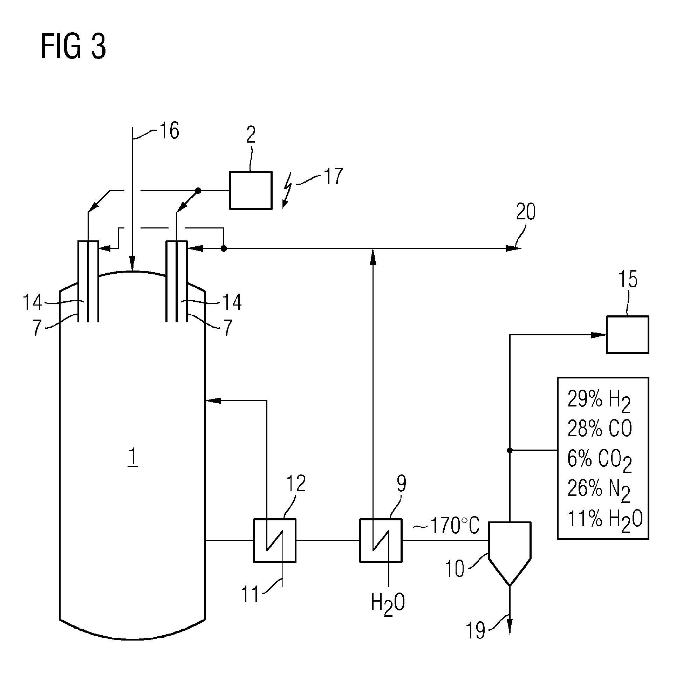

### Variante nach Figur 3

Die Ausführung nach Figur 3 unterscheidet sich von Figur 1 und 2 durch eine zusätzliche Zufuhr von sauerstoffhaltigem Gas, in diesem Beispiel Luft (11), in den Vergasungsreaktor. Das erzeugte Rohgas wird nachfolgend in einem zweistufigen Abhitzekessel auf ca. 170°C gekühlt. Innerhalb der ersten Stufe (12) wird die in den Vergasungsreaktor geführte Luft vorgewärmt und in der zweiten Stufe (9) wird Dampf für die Kühlung der Plasmalanzen und die Wasserdampfreaktion erzeugt. Überschussdampf (20) wird in einer Anlage zur Kraft-Wärmekopplung (Prozessdampf) genutzt. Das den Abhitzekessel verlassene Rohgas wird dann in einem nächsten Prozessschritt (10) von Aschepartikeln gereinigt. Dieser Reinigungsschritt erfolgt über trockene Filtersysteme wie zum Beispiel Tuchfilter oder einen Elektrofilter. Nach der mechanischen Reinigung wird das Synthesegas zur Stromerzeugung in einem Gasmotor, einer Brennstoffzelle oder Gasturbine genutzt.

Das erzeugte Synthesegas enthält aufgrund der zugeführten Verbrennungsluft (11) und damit verstärkt ablaufenden exothermen Oxidationsreaktion einen geringeren Heizwert und Wasserstoffgehalt. Da gleichzeitig die elektrische Plasmaleistung zur Bereitstellung der Reaktionswärme reduziert werden kann, erhöht sich der Gesamtwirkungsgrad bei einer Stromerzeugungsanlage mit Gasmotor, Brennstoffzelle oder Gasturbine.

Als allotherm werden in der Verfahrenstechnik Umwandlungsprozesse bezeichnet, bei denen eine äußere Wärmezufuhr (endotherme Reaktion) notwendig ist; die Wärmezufuhr an sich ruft dabei aber keine direkte chemische Änderung (wie z.B. durch Verbrennung) hervor. Beispiele dafür sind allotherme Pyrolysen, bei denen die Biomasse durch von außen zugeführte Wärme gespalten wird.

Die Erfindung betrifft auch ein Verfahren zum Vergasen von festen oder flüssigen Vergasungsstoffen, insbesondere Biomasse, bei Drücken zwischen Normaldruck und 10 MPa sowie bei Temperaturen zwischen 800°C und 1500°C zu einem hochkalorischen Synthesegas, demzufolge in dem Vergasungsraum eines Flugstromvergasers ein endothermer Wasserdampfvergasungsprozess abläuft und ein Plasma Reaktionswärme in einer Menge in den Vergasungsraum einbringt derart, dass die Temperatur unter der Ascheerweichungstemperatur gehalten wird.

### Bezugszeichenliste

- 1.: Vergasungsreaktor
- 2.: Plasmaerzeuger
- 3.: Quenchraum zur Vollquenchung
- 4.: Venturiwäscher
- 5.: Wasserstoffanlage / chemische Syntheseanlage
- 6.: Synthesegasgebläse
- 7.: Plasmalanze mit Mittel zur Energiezufuhr
- 8.: Quenchraum zur Teilquenchung
- 9.: Abhitzenutzung zur Dampferzeugung
- 10.: Staubfilter
- 11.: Luftzufuhr
- 12.: Abhitzenutzung zur Luftvorwärmung
- 13.: Rußwasseranlage
- 14.: Plasmagaszufuhr
- 15.: Gasmotor / Gasturbine
- 16.: Vergasungsstoff, Biomasse
- 17.: Elektrische Energiezufuhr
- 18.: Filterkuchen
- 19.: Partikel
- 20.: Dampfexport

## Patentansprüche

1. Verfahren zum Vergasen von festen oder flüssigen Vergasungsstoffen bei Drücken zwischen Normaldruck und 10 MPa sowie bei Vergasungstemperaturen zwischen 800°C und 1500°C zu einem Synthesegas, demzufolge
ein endothermer Wasserdampfvergasungsprozess im Flugstromprinzip und unter Nutzung eines Plasmas mittlerer Temperatur, typisch < 3500°C, insbesondere < 2000°C, abläuft und die benötigte Reaktionswärme wenigstens teilweise durch das Plasma eingebracht wird.

2. Verfahren nach Anspruch 1
**dadurch gekennzeichnet, dass**
die benötigte Reaktionswärme vollständig durch das Plasma eingebracht wird.

3. Verfahren nach einem der vorstehenden Ansprüche
**dadurch gekennzeichnet, dass**
das Plasma mittlerer Temperatur durch eine Gleichstromentladung erzeugt wird.

4. Verfahren nach einem der vorstehenden Ansprüche 1 bis 2
**dadurch gekennzeichnet, dass**
das Plasma mittlerer Temperatur durch eine niederfrequente Wechselstromentladung erzeugt wird.

5. Verfahren nach einem der vorstehenden Ansprüche 1 bis 2
**dadurch gekennzeichnet, dass**
das Plasma mittlerer Temperatur durch elektromagnetische Wellen erzeugt wird.

6. Verfahren nach einem der vorstehenden Ansprüche
**dadurch gekennzeichnet, dass**
eine oder mehrere mit einem Plasmaerzeuger (2) verbundene Plasmalanzen (7) zur Erzeugung des Plasmas mittlerer Temperatur im Vergasungsraum (1) des Flugstromvergasers angeordnet sind und die eine oder mehrere Plasmalanzen (7) gekühlt werden.

7. Verfahren nach Anspruch 6
**dadurch gekennzeichnet, dass**
die eine oder mehreren Plasmalanzen (7) mit Dampf gekühlt werden.

8. Verfahren nach Anspruch 6
**dadurch gekennzeichnet, dass**
die eine oder mehreren Plasmalanzen (7) mit rückgeführtem Synthesegas gekühlt werden.

9. Verfahren nach einem der vorstehenden Ansprüche 6 bis 8
**dadurch gekennzeichnet, dass**
das Oxidationsmittel, Luft oder Sauerstoff, dem Vergasungsreaktor über eine Plasmalanze (7) zugeführt wird.

10. Verfahren nach einem der vorstehenden Ansprüche 6 bis 9
**dadurch gekennzeichnet, dass**
das Oxidationsmittel, Luft oder Sauerstoff, dem Vergasungsreaktor gesondert von einer Plasmalanze (7) zugeführt wird.

11. Verfahren nach einem der vorstehenden Ansprüche 6 bis 10
**dadurch gekennzeichnet, dass**
die Vergasungstemperatur mittels des Plasmagasstroms geregelt wird derart, dass sie unter der Ascheerweichungstemperatur gehalten wird.

12. Verfahren nach einem der vorstehenden Ansprüche 6 bis 11
**dadurch gekennzeichnet, dass**
das erzeugte Synthesegas durch eine Kombination aus Wasserquenchung und Abhitzenutzung gekühlt wird und der erzeugte Dampf zur Kühlung der Plasmalanzen (7) und für die Wasserdampfvergasungsreaktion verwendet und Überschussdampf (20) exportiert wird.

13. Verfahren nach einem der vorstehenden Ansprüche 6 bis 11
**dadurch gekennzeichnet, dass**
das erzeugte Synthesegas durch eine Abhitzenutzung gekühlt wird und der erzeugte Dampf zur Kühlung der Plasmalanzen (7) und für die Wasserdampfvergasungsreaktion verwendet wird und Überschussdampf (20) exportiert wird.

14. Verfahren nach einem der vorstehenden Ansprüche 6 bis 11
**dadurch gekennzeichnet, dass**
das erzeugte Synthesegas durch eine zweistufige Abhitzenutzung gekühlt wird und in der ersten Stufe (12) die für den Vergasungsprozess verwendete Luft (sauerstoffhaltiges Gas) vorgewärmt wird und in einer zweiten Stufe (9) Dampf zur Kühlung der Plasmalanzen (7) und für die Wasserdampfvergasungsreaktion erzeugt und Überschussdampf (20) exportiert wird.

15. Verfahren nach einem der vorstehenden Ansprüche
**dadurch gekennzeichnet, dass**
das erzeugte Synthesegas durch eine Kombination aus Wasserquenchung (8) und Abhitzenutzung zur Vorwärmung (12) eines sauerstoffhaltigen Gases/Luft gekühlt wird, wobei das Gas/Luft als Oxidationsmittel für den Vergasungsprozess verwendet wird.

16. Verfahren nach einem der vorstehenden Ansprüche
**dadurch gekennzeichnet, dass**
das erzeugte Synthesegas durch Wasserquenchung (8) gekühlt wird.

17. Verfahren nach einem der vorstehenden Ansprüche
**dadurch gekennzeichnet, dass**
das gekühlte Synthesegas durch eine trockene Gasreinigung (10) gereinigt wird und Feststoffpartikel (19) entfernt werden.

18. Verfahren nach einem der vorstehenden Ansprüche
**dadurch gekennzeichnet, dass** das gekühlte Synthesegas durch eine Nasswäsche (4) gereinigt wird.

19. Verfahren nach einem der vorstehenden Ansprüche
**dadurch gekennzeichnet, dass**
Biomasse mit einer Partikelgröße < 2mm über ein mechanisches Eintragssystem in den Flugstromvergasungsreaktor eingetragen wird.

20. Flugstromvergaser, insbesondere zur Durchführung eines Verfahrens nach den Ansprüchen 1 bis 19, zur Vergasung flüssiger aber auch fester Brennstoffe, insbesondere Biomasse, mit Wasserdampf als Oxidationsmittel bei Temperaturen zwischen 800 und 1.500°C sowie Drücken zwischen Umgebungsdruck und 10 MPa zu Synthesegas, bei dem
Mittel für die Erzeugung eines nichtthermischen Plasmas mittlerer Temperatur, typisch < 3500°C, insbesondere <2000°C, in dem Vergasungsraum (1) des Flugstromvergasers angeordnet sind.

21. Flugstromvergaser nach Anspruch 20
**dadurch gekennzeichnet, dass**
als Mittel Plasmalanzen (7), die mit einem Plasmaerzeuger (2) verbunden sind, angeordnet sind.
